# EUROPEAN PATENT APPLICATION

(11) **EP 2 338 835 A1**
(43) Date of publication of application: **29.06.2011**
(21) Application number: 09813991.8
(22) Date of filing: 08.07.2009
(51) Int. Cl.: C01B 33/027, B01J 8/18

(54) **REACTOR AND METHOD FOR PRODUCING HIGH-PURITY GRANULAR SILICON**

(30) Priority: 16.09.2008 CN 200810160997; 28.12.2008 CN 200810187430; 17.06.2009 CN 200910149144
(71) Applicant: Sunnyside Technologies, Inc., Minnesota 55112 (US)
(72) Inventor: Sunnyside Technologies, Inc., Minnesota 55112 (US)
(74) Representative: Maury, Richard Philip
(86) International application number: PCT/CN2009/072688
(87) International publication number: WO 2010/031270

(57) **Abstract**

Provided is a reactor and a method for producing high-purity granular silicon. The reactor comprises a reactor chamber; a solid inlet, an attendant gas inlet, a feed gas inlet and a tail gas outlet which are fitted on the reactor chamber, wherein a gas distributor is located in the reactor chamber; the reactor chamber is fitted with preheating means; a tail gas treating means is provided outside the reactor chamber between the preheating means and the gas inlet; the reactor chamber is connected to a surface treating means; the reactor chamber is fitted with a heating means and a motion inducing means. By the reaction of silicon-containing gas in a compact high purity granular silicon bed in motion state and use of the tail gas heat for preheating, it is realized to produce high-purity granular silicon effectively and continuously in reduced energy, large scale and low cost.

## Description

### Technical Field

The present invention relates to high-purity silicon production technology, especially to a reactor and a method for producing high-purity granular silicon.

### Background Art

In the past, high-purity silicon materials were mainly used for producing semiconductor components. With the development of semiconductor integrated circuit technology, circuits have increasingly high integration level. Although the application of electronic devices is increasingly wide, consumption of high-purity silicon does not greatly increase. Since high-purity silicon is also an important raw material for producing solar photovoltaic cells, there has been a growing demand for high-purity silicon with the development of solar photovoltaic industry in recent years, and the demand has now exceeded the amount used in the semiconductor industry and is increasing at a high speed. On the other hand, solar photovoltaic industry belongs to industries with small profit margins, so it requires low production costs of high-purity silicon materials, which presents a great challenge to traditional production methods.

Traditional methods for producing high-purity polycrystalline silicon include the Siemens process and the fluidized bed process.

The Siemens process is as follows: a high-purity silicon-containing gas such as trichlorosilane (SiHCl₃) or silane (SiH₄) which has been purified is mixed with hydrogen gas, then they are introduced into a reactor, a thermal decomposition reaction takes place on the surface of a silicon core rod that is electrically heated, high-purity silicons continuously deposit on the surface of the hot silicon core rod to make it thickened continuously, and the gases after the reaction return to a tail gas treating system to be subjected to a separation treatment and recycled for use. After the silicon core rod grows to a certain diameter, the reaction has to be terminated and the silicon core rod shall be changed before the next round of reaction is carried out. This process is an intermittent operation and has high electric power consumption. It consumes about 150 kwh (kilowatt-hour) or even higher electricity per production of one kilogram of high-purity silicons on average. In addition, this process also has disadvantages like low conversion efficiency. Therefore, when the Siemens process is used to produce high-purity silicon, the output is low, the cost is high, and it cannot meet increasingly growing industrial needs.

The fluidized bed process is as follows: high-purity granular silicons are used as "seeds" to form a fluidized state in a reactor which is being heated and then a high-purity silicon-containing gas is introduced. Thus, a thermal decomposition reaction takes place on the surfaces of the seeds that are being heated, which makes the high-purity granular silicons grow larger and larger so that they cannot be floated and thereby drop into a collecting box. A large number of high-purity granular silicons are used as "seeds" in the fluidized bed process and the entire surface area has a greater increase with respect to the Siemens process, so the reaction efficiency and the conversion efficiency have greater increases as compared with the Siemens process while electric power consumption decreases consequently.

After study, the inventor has found that using traditional fluidized bed process to produce high-purity silicon includes the following major problems:
1. High-purity silicon particles separate from each other in a suspended state to form a space of above 80%, making the silicon-containing gas decomposed into a great deal of powder silicons that are taken out of the reactor with the gas. Therefore, utilization rate of raw material (gas) is reduced and the cost is increased, leading to waste. Moreover, silicon powders enter the downstream, which has increased the difficulty in treating the reaction tail gas and the cost of production equipment and tends to cause contamination.
2. All the silicon particles inside the suspension reactor need to consume a great number of gases, thus causing difficulty in gas recovery. Moreover, the utilization rate of residual heat of the reaction is low and the operating cost has been increased.
3. Since the granular silicon surface forms a semi-molten state at the reaction temperature (200°C to 1,400'C), adhesiveness between the particles is very strong, thus causing agglomeration of particles to thereby plug the gas inlet hole and channel of the reactor, leading to accidents of production halt.
4. The reactor has a large volume, the space effectively used is small, the production scale is small, and the construction cost and difficulty of the production equipment are increased.
5. The preparation of high-purity granular silicons as the seeds is relatively difficult and impurities tend to be mixed during the preparation process.

### Summary of the Invention

The object of the present invention is to provide a reactor and a method for producing high-purity granular silicon which are used for realizing effective and continuous production of high-purity granular silicon in reduced energy, large scale, and low cost.

In order to achieve the aforesaid object, the present invention provides a reactor for producing high-purity granular silicon, comprising:
a reactor chamber;
a solid inlet, an attendant gas inlet, a feed gas inlet, and a tail gas outlet are fitted on the reactor chamber;
a gas distributor is fitted inside the reactor chamber, wherein the gas distributor is used for dispersing attendant gas and feed gas into the reactor chamber;
the reactor chamber is fitted with an internal or external preheating means; and a tail gas treating means is fitted outside the reactor chamber and connected between the preheating means and the attendant gas inlet and the feed gas inlet;
the reactor chamber is connected to an internal or external surface treating means, wherein the surface treating means is used for surface treating the high-purity granular silicon obtained by production; and
the reactor chamber is fitted with internal or external heating means and motion inducing means, wherein the motion inducing means is used for inducing high-purity granular silicons in a high-purity granular silicon bed inside the reactor chamber to be in a relative motion state.

In order to achieve the aforesaid object, the present invention further provides a method for producing high-purity granular silicon, comprising the following steps of:
forming a high-purity granular silicon bed in which high-purity granular silicons are densely distributed and which has a filling ratio of above 10%;
heating the high-purity granular silicon bed so as to make the temperature of the high-purity granular silicon bed 100°C to 1,400°C; and making the high-purity granular silicons in the high-purity granular silicon bed in a relative motion state;
introducing attendant gas and feed gas, wherein the attendant gas is high-purity H₂ and/or inert gas, and the feed gas is a silicon-containing gas or the feed gas is a silicon-containing gas and the reducing gas H₂;
introducing the reaction tail gas into the reactor chamber through the attendant gas inlet or the feed gas inlet to be recycled for use after the reaction tail gas has exchanged heat with the replenished high-purity granular silicons and then separated by the tail gas treating means according to gas components; and getting the replenished high-purity granular silicons into the reactor chamber after they have been heated; and
surface treating the high-purity granular silicons obtained by production, and then cooling, collecting, and packing them.

The reactor and the method for producing high-purity granular silicon provided by the present invention use a densely-stacked high-purity granular silicon bed in a motion state, so bonding between granular silicons is avoided and the volume of the reactor has been reduced. Moreover, the high-purity powder silicons in the reaction tail gas are captured by the densely-stacked high-purity granular silicon bed and are used as the seeds, and the residual heat of the reaction tail gas is also used for heating the replenished granular silicons. Therefore, the reactor and the method provided by the present invention have realized effective and continuous production of high-purity granular silicon in reduced energy, large scale, and low cost.

### Brief Description of the Drawings

Fig. 1 is a schematic view of an example of the reactor for producing high-purity granular silicon in the present invention.
Fig. 2 is a schematic view of the reactor chamber in the example of the reactor for producing high-purity granular silicon in the present invention.
Fig. 3 is a schematic view of a vertical multistage reactor in the example of the reactor for producing high-purity granular silicon in the present invention.
Fig. 4 and Fig. 5 are cross-sectional optical microphotographs of the high-purity granular silicon produced in the examples of the present invention.
Fig. 6 is an X-ray diffraction pattern of the high-purity granular silicon produced in the examples of the present invention.

### Detailed Description of the Embodiments

The technical solutions of the examples of the present invention will be further explained below by combining the figures and specific examples.

### Example of the reactor for producing high-purity granular silicon:

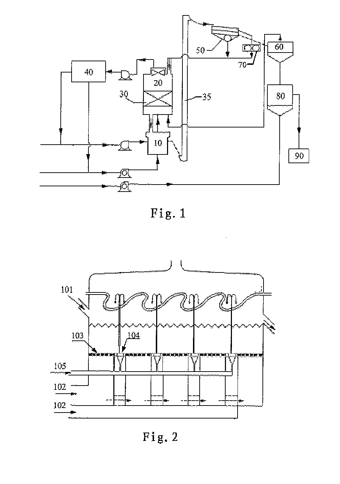

Fig. 1 is a schematic view of an example of the reactor for producing high-purity granular silicon in the present invention. Fig. 2 is a schematic view of the reactor chamber in the example of the reactor for producing high-purity granular silicon in the present invention. Referring to Fig. 1 and Fig. 2, the device comprises: a reactor chamber 10, a preheating means 20, a tail gas treating means 40, a surface treating means 60, a heating means, and a motion inducing means.

The interior of the reactor chamber 10 may be a space in many kinds of shapes such as square, cylinder, or rectangle, and the space can be divided into layers and partitions can be split. The reactor chamber 10 may be vertically, inclinedly, or horizontally placed and can conduct concurrent flow or countercurrent flow operation during the reaction. When the reactor chamber is vertically or inclinedly placed, the height of the reactor chamber may be 1 m to 100 m, preferably 1 m to 50 m. For example, when the height of the reactor chamber is I m, the reactor may be a one-stage reactor and may also be a multi-stage reactor, wherein the height of each stage is at least 10 cm to 20 cm. When the height of the reactor chamber is 50 m, the reactor may be a one-stage reactor or a multi-stage reactor, the heights of all the stages may be different, and when the reactor is a multi-stage reactor, the height of each stage is at least 10 cm to 20 cm. When the height of the reactor is a fixed value such as 50 m, the height of each stage may also be set according to the number of stages needed by the reaction. If the reactor is a one-stage reactor, the height of one stage is 50 m; and if the reactor is a five-stage reactor, then the height of each stage is about 10 m. Similarly, when the height of the reactor chamber is 70 m or 100 m, the reactor may also be a one-stage reactor or a multi-stage reactor and the height of each stage can be set according to the number of stages needed by the reaction. Also, a small-sized reactor (e.g., the height of the reactor chamber is 1 m or 50 m) may be magnified at equal proportion, and a plurality of small-sized reactors may also be superposed. The size of the reactor chamber is determined by actual situation of the reaction to make the conversion efficiency being the highest when the reactant gases pass the reaction bed while saving the most energy. Herein, the present invention does not limit the height of the reactor chamber, for instance, the height of the reactor chamber may also be 1 m to 1,000 m. When the reactor chamber is horizontally placed, then the length of the aforesaid reactor chamber may be 1 m to 100 m, preferably 1 m to 50 m. Specific description of the length of the reactor chamber is similar to the aforesaid description of the height of the reactor chamber, but it can be two-dimensional distribution and then three-dimensional superposition, i.e., a plurality of horizontally placed reactor chambers are superposed longitudinally.

In the present invention, the reaction for producing high-purity granular silicon is an endothermic reaction. In order to ensure no or less heat loss, the case of the reactor chamber 10 may consist of three layers, wherein the inner layer is a refractory inner container, the intermediate layer is a thermal insulation layer composed of a thermal insulation material such as refractory fiber and slag wool, and the outer layer functions to support the steel case.

As shown in Fig. 2, a solid inlet 101 is fitted on the reactor chamber 10 and is used for feeding high-purity granular silicons as the seeds into the reactor chamber 10.

An attendant gas inlet 102, a feed gas inlet 105, and a tail gas outlet are further fitted on the reactor chamber 10, wherein the attendant gas is high-purity reducing gas H₂ and/or inert gas (such as Ar or He), and the feed gas is a high-purity silicon-containing gas or the feed gas is a high-purity silicon-containing gas and the reducing gas H₂, wherein the silicon-containing gas may be one or more selected from the group consisting of SiH₄, SiHCl₃, SiCl₄, SiH₂Cl₂, ... and SiBr₄. The gases (including the feed gas and the attendant gas) used in the present invention have a purity of above 99.99%. The silicon-containing gas component in the feed gas is 1% to 100%.

The attendant gas inlet 102 leads to a gas distributor 103 located inside the reactor chamber 10 and the feed gas inlet 105 leads to a feed gas nozzle 104. The attendant gas and the feed gas are dispersed into the reactor chamber 10 through the gas distributor 103 and the feed gas nozzle 104. The high-purity granular silicons as the seeds added through the solid inlet 101 densely stack on the gas distributor 103 to form a high-purity granular silicon bed (or the high-purity granular silicon bed may not stack on the gas distributor, but the residence time of materials in the reactor chamber of each stage is controlled by relying on the diameter of the reaction chamber and the material circulation speed instead). The granularity distribution of the high-purity granular silicons as the seeds may overlap with the granularity distribution of the high-purity granular silicon product obtained by production, i.e., the particle size of a portion of high-purity granular silicons as the seeds may be greater than or equal to the particle size of the high-purity granular silicon product. It is preferred that the particle size of the high-purity granular polycrystalline silicons as the seeds is 10% to 30% of the particle size of the high-purity granular silicon product obtained by production, wherein the particle size of the high-purity granular silicon product obtained by production is determined according to different application situations and is generally between 1 mm and 20 mm. Specifically, the gas distributor 103 is composed of a flower plate (or called sieve plate) and a blast cap and may also be composed of only one flower plate (porous sieve plate) without blast cap. The gas distributor 103 may be a distributor of direct current, side flow, porous, or filling type. Because of the dense stacking of the high-purity granular silicon bed, the volume of the reactor in the example of the present invention is enabled to be relatively smaller and can increase the output while reducing the reactor volume as compared with the exiting fluidized bed process.

The preheating means 20 is fitted inside or outside the reactor chamber 10. As shown in Fig. 1, the preheating means 20 in the present example is fitted outside the reactor chamber 10. A solid inlet is fitted in the preheating means 20 and used for replenishing high-purity granular silicons as the seeds. Since the process for producing high-purity granular silicon in the present invention is a process of consuming seeds, high-purity granular silicons as the seeds need to be continuously replenished. The reaction tail gas heats the high-purity granular silicons replenished as the seeds through the preheating means 20.

The tail gas treating means 40 is fitted outside the reactor chamber 10 and is connected between the preheating means 20 and the attendant gas inlet 102 and the feed gas inlet 105. After the reaction tail gas passes the preheating means 20, it enters the tail gas treating means 40 which separates the reaction tail gas according to gas components. Then, separated gases are introduced into the reactor through the attendant gas inlet or the feed gas inlet to be recycled for use.

The reaction tail gas will carry high-purity powder silicons for the following reasons: 1. during the operation of the reactor, strong disturbance of particles in the high-purity granular silicons and/or the high-purity granular silicon bed will cause abrasion of particles; and 2. the pyrolysis of the silicon-containing gas in the present invention itself can produce powder silicons. The high-purity granular silicon bed in the present invention is densely stacked, so when the reaction tail gas is cycled into the reactor chamber after it is treated by a preheater and the tail gas treating means, the high-purity granular silicon bed densely stacked in the reactor will capture powder silicons in the reaction tail gas, thus performing the function of a dust catcher.

The surface treating means 60 is fitted inside or outside the reactor chamber 10 and is used for surface treating the high-purity granular silicon obtained by production. The surface of the high-purity granular silicon produced by reaction is generally loose and tends to produce dust, which will affect the utilization in the downstream production. Therefore, the surface of the high-purity granular silicon needs to be treated so as to become relatively dense. The surface treating means 60 is preferably a reaction chamber containing low-concentration reactant gas having a concentration of 0% to 10%. The surface treating means 60 may be some sections in the reactor. In a spouted bed containing low-concentration reactant gas (having a concentration of 0% to 10%), the surface of the high-purity granular silicon will form a dense silicon structure, thereby achieving the effect of surface treatment. Moreover, a surface treatment process carried out in this manner will not introduce impurities and other treatment procedures, so the production cost is reduced. The surface treatment process may certainly also use traditional acid washing, cleaning, and drying processes.

The heating means is fitted inside or outside the reactor chamber 10. In order to make the reaction achieve the reaction temperature, the reactants need to be heated. The heating means is preferably a power supply which is electrically connected with the high-purity granular silicon bed, i.e., adding an electric pressure to the high-purity granular silicon bed. Because of semiconductor property of silicon, the high-purity granular silicon bed emits heat which results in an increase in the temperature of the high-purity granular silicon bed. Using this method is direct heating, thermal efficiency is high and heat utilization rate is high. Using high-purity granular silicon as a heat emitter may also avoid contamination to thereby guarantee the product purity.

The heating means may further use other existing heating ways: 1) direct heating by using a resistance wire (materials such as a silicon rod, high-purity SiC, high-purity SiN, or graphite); 2) indirect heating by using microwave, plasma, laser, induction, or the like; 3) indirect heating by using combustion provided by flaming radiant tube or by using a rotary kiln; 4) using a jacketed heat exchanger and a heat exchanger in the bed, wherein the jacketed heat exchanger may use induction heating and heat carrier heating, and the heat exchange in the bed may use heat carrier heating, induction heating, electrode bar heating, and the like; 5) external heating manners, for instance, externally heating the reactants (such as suspension gas and silicon particles per se) needed in the reaction and then introducing them into the reactor; and 6) coupling reaction heating by using a chemical reaction, for instance, adding chlorine gas (Cl₂) or hydrogen chloride (HCl) into the system.

In order to make it uneasy for the high-purity granular silicons to be bonded during the production of high-purity granular silicon, the reactor in the present invention further comprises a motion inducing means which is used for inducing the high-purity granular silicons in the high-purity granular silicon bed to be in a relative motion state. The motion inducing means is fitted inside or outside the reactor chamber 10. It is preferable that the motion inducing means is an attendant gas nozzle and/or a feed gas nozzle. The attendant gas nozzle and the feed gas nozzle are fitted inside the reactor chamber 10, they are respectively connected with the attendant gas inlet and the feed gas inlet, and they are used for spraying the attendant gas and the feed gas into the reactor chamber 10 to stir the high-purity granular silicon bed to induce the high-purity granular silicons in the high-purity granular silicon bed to be in a relative motion state, thereby avoiding bonding between the high-purity granular silicons. Moreover, since the feed gas is sprayed into the high-purity granular silicon bed, it is not easy for the high-purity granular silicon seeds contacting and close to the gas distributor in the high-purity granular silicon bed to react, and thus clogging of the gas distributor 103 can be avoided.

The motion inducing means may also realize inducing the high-purity granular silicon bed to be in a motion state in the following manners: 1) introducing an external force such as spraying, turning, stirring, mixing, vibrating or making the high-purity granular silicon bed flow under gravity and pass through the intertwining comb structure installed on the inner wall; 2) making the reactor in other gravitational field (such as a centrifugal force field); 3) using a stirred fluidized bed; and 4) using a vibrated fluidized bed (including mechanical vibration, sound wave or ultrasonic vibration, and insertion type vibration).

Furthermore, in order to better capture high-purity powder silicons in the reaction tail gas and use them as replenished high-purity granular silicon seeds, the reactor in the present invention further comprises a gas-solid separating means 30. The gas-solid separating means 30 is fitted inside or outside the reactor chamber 10 and is connected with the preheating means 20. The reaction tail gas discharged from the reactor chamber 10 passes through the gas-solid separating means 30 which captures high-purity powder silicons therein and returns the high-purity powder silicons into the reactor chamber 10 as the seeds to take part in the reaction again or to be kneaded onto the high-purity granular silicon particles.

The gas-solid separating means 30 is preferably a densely-stacked high-purity granular silicon particle layer (having a filling ratio of greater than 50%, preferably 50% to 80%). For instance, the high-purity granular silicon particle layer may be specifically as follows: high-purity granular silicon particles are densely stacked inside a plurality of silicon tubes (or ceramic tubes) having holes and they are covered with glass cloth, and these silicon tubes are divided into several groups to be hung on the top of the expansion section of the reactor or outside the reactor. When the reaction tail gas passes through the gas-solid separating means, i.e., when the reaction tail gas passes through the dense high-purity granular silicon particle layer, high-purity powder silicons carried in the reaction tail gas can be captured. The use of the gas-solid separating means not only can prevent high-purity powder silicons from entering the downstream of the reaction but also can simply produce high-purity granular silicon seeds without contamination. A filling ratio is a ratio of the space filled by the high-purity granular silicons to the space occupied by the high-purity granular silicons. The filling ratio is related to particle shape and particle size distribution. The filling ratio is not relative to the entire reaction chamber. For instance, when the filling ratio is 70%, there may be only 20% of the reaction chamber being filled.

Certainly, the gas-solid separating means 30 may also use other forms to achieve the effect of gas and solid separation, such as: 1) enlarging the top of the reactor by changing the inside diameter of the reactor to change the escape velocity of small particles, thereby realizing settling capture; 2) using a cyclone separator; and 3) using a filter or a dust remover.

In order to make the high-purity granular silicons produced have uniform particle size, the reactor in the present invention may further comprise a screening means 50. The screening means 50 is fitted inside or outside the reactor chamber 10 and is connected between the reactor chamber 10 and the surface treating means 60. The high-purity granular silicons produced by reaction are introduced into the screening means 50 for screening. Excessively large particles after being triturated are sent together with small particles back to the preheating means 20 and are returned after being heated into the reactor chamber to continue to grow; and high-purity granular silicons meeting the particle size requirement are selected for the next processing. Thereby, the size of the product particles can be controlled within the optimal size range needed, which not only can reduce possible surface contamination (when the particles are relatively small, they tend to be contaminated due to relatively large surface area thereof) but also facilitate the utilization in the downstream production. During the screening and recycling processes, direct contact of high-purity granular silicons with other non-silicon element materials, metals in particular, shall be avoided as far as possible to prevent a decrease in the product quality due to impurity contamination.

In order to provide other manners to replenish high-purity granular silicons as the seeds, the reactor in the present invention may further comprise a triturator 70. The triturator 70 is connected between the screening means 50 and the preheating means 20 and is used for triturating a portion of the high-purity granular silicons screened out.

During the production of high-purity granular silicon in the present invention, high-purity granular silicon seeds are continuously being consumed. When the amount of high-purity powder silicons separated out by the gas-solid separating means 30 is not enough to replenish the consumption of high-purity granular silicon seeds in the reactor, large particles of high-purity granular silicons screened out are triturated by the triturator 70, and small particles generated by trituration are heated by the preheating means 20 and then returned into the reactor chamber 10. The high-purity granular silicons produced in the present invention contain hydrogen, so the triturator may also crack high-purity granular silicons by rapidly heating the high-purity granular silicons containing hydrogen to form small particles as the seeds. The triturator 70 may further be existing triturators such as high-speed gas breakers, ultrasonic disintegrators, or dust collector for crushing (rotoclone collector and cloth screen).

In order to reduce silicon deposition on the inner wall of the reactor chamber, a gas curtain (passing or not passing the inner wall) means which is tangent to the inner wall of the reactor chamber may be further fitted inside the reactor chamber. The gas curtain means is used for producing gas curtains covering the inner wall of the reaction chamber. The gas curtain means may be specifically as follows. A plurality of strip-shaped air holes whose inclinations with the inner wall surface are as small as possible are incised on the wall of the reactor chamber, and the strip-shaped air holes can be latitudinal or longitudinal. After a gas not containing silicon (inert gas) is introduced externally from the reactor chamber, a gas curtain which covers the inner wall of the reaction chamber and is tangent to the inner wall surface will be formed after the gas not containing silicon passes through the plurality of strip-shaped air holes and enters the interior of the reactor chamber. The gas curtain can prevent the silicon-containing gas inside the reactor chamber from depositing silicon on the inner wall of the reactor chamber. Also, the gas curtain means may be specifically as follows. A ring tube is fitted at the bottom or on the top inside the reactor chamber and is connected with external gas not containing silicon (inert gas). Several strip-shaped air holes which are parallel to the inner wall of the reactor chamber are opened on the ring tube. After the gas not containing silicon is introduced into the ring tube, a gas curtain which covers the inner wall of the reaction chamber and is tangent to the inner wall surface will be formed and the gas curtain can prevent the silicon-containing gas inside the reactor chamber from depositing silicon on the inner wall of the reactor chamber.

The reactor provided in the example of the present invention may further comprise a monitoring and central control system to record specific technological parameters in each link of the reaction device. After the specific technological parameters exceed a normal range, the monitoring and central control system will give a warning and provide automatic adjustments, wherein parameters of the reactor need to be tested include: temperatures of the bed bottom (including gas and solid temperatures), composition of the outlet gases (reaction tail gases), pressure, granularity of solids, bed density, heat transfer and mass transfer, and movement direction of the solid particles.

The reactor chamber and the preheating means in the example of the present invention may use latitudinal or longitudinal multistage and multi-dimensional structure (the gas nozzle in Fig. 2 can be a plurality of gas nozzles in a two-dimensional array distribution). The order of reaction may be 1 to 50, preferably 1 to 20, and more preferable 3 to 10 so as to increase effective reaction time and heat exchange efficiency, reduce the amount of powder silicons taken out, and reduce the reactor size and construction costs. When the reaction is a multi-order reaction, the reaction tail gas in each order can use its residual heat to heat the high-purity granular silicons in the next order, thereby improving the heat exchange efficiency and increasing effective reaction time. For instance, when the reaction is a three-order reaction, the heat exchange efficiency is increased by 60% and effective reaction time is increased by 3 times; and when the reaction is a six-order reaction, the heat exchange efficiency is increased by 80% and effective reaction time is increased by almost 6 times.

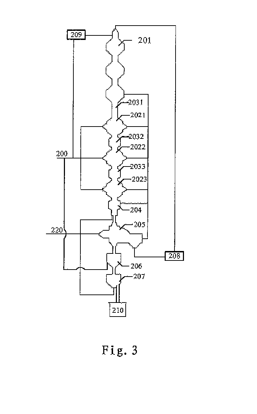

Fig. 3 is a schematic view of a vertical multistage reactor in the example of the reactor for producing high-purity granular silicon in the present invention. Referring to Fig. 3, the process of reaction by using the multistage reactor is described as follows. High-purity granular silicon seeds are heated by tail gases in the multistage reactor stage by stage starting from a primary preheater 201 at the top of the reactor. After the high-purity granular silicon seeds are heated by the preheater and a first-stage heater 2031 to a needed temperature, they enter a first-stage reactor 2021 and react with the silicon-containing gas to thereby grow a high-purity silicon layer on the surfaces of the high-purity granular silicon seeds per se. (In order to reduce danger, the attendant gas may use argon gas), the temperature of the high-purity granular silicon seeds is reduced because of their participation in an endothermic decomposition reaction. The high-purity granular silicon seeds descend to a second-stage heater 2032 to be heated and then enter a second-stage reactor 2022 for reaction. Likewise, the high-purity granular silicon seeds descend to a third-stage heater 2033 to be heated and then enter a third-stage reactor 2023 for reaction. After going through the multi-order reaction, the granularity of the high-purity granular silicon gradually grows.

The following points need to be pointed out:

Firstly, the flow direction of the reactant gases may be perpendicular to the flow direction of the particles and may also be at any angle with the flow direction of the particles. Secondly, the residence time of materials in the reaction chamber of each stage is controlled by relying on the diameter of the reaction chamber and the material circulation speed. Thirdly, the silicon-containing gas will produce powder silicons in reactions of all stages. A portion of these powder silicons go with the reaction tail gas into a final-stage preheater, then they ascend stage by stage, and finally the gas-solid means (densely-stacked high-purity granular silicon particle layer) in the preheater block all the powder silicons which go down with the high-purity granular silicons to be used as new seed particles for the reactions. Fourthly, a portion of the powder silicons will go down with high-purity granular silicons into a kneading reactor 204. Thereby, powder silicons are kneaded onto the surfaces of large high-purity granular silicons under the condition of absence of silicon-containing gas (i.e., under the condition of presence of inert gas) to make the particles of high-purity granular silicons grow bigger and spherical, thereby avoiding the existence of a large number of dusts after the high-purity granular silicons enter a screening machine 205 causing operational difficulty and affecting subsequent procedures. After the high-purity granular silicons are screened by the screening machine 205, large particles enter a surface treating machine 206 in which the surfaces of the high-purity granular silicons are subjected to dense coating by a silicon-containing gas having a relatively low concentration to thereby make the surface of each high-purity granular silicon bright and neat. The high-purity granular silicons that have been surface treated are cooled by a cooler 207 and then enter a packing machine 210 for packing. Small particles screened out by the screening machine 205 are returned to the primary preheater 201 by a transporting means 208, thereby completing the entire cycle. The tail gas discharged from the primary preheater 201 has been cooled to a relatively low temperature such as 100°C to 200°C. Because of powder filtration effect of each preheater, the tail gas contains low level of powder silicon. After the tail gas enters a tail gas separator 209, it can be separated into a high-purity gas to be mixed with the feed gas to be further injected back into the reactor, thereby completing another cycle. A first channel 200 is the feed gas inlet and a second channel 220 is the attendant gas inlet.

In order to reduce or avoid contamination of silicon by the reactor material and ensure the reactor material to have enough mechanical strength under high temperature condition, the material for each part of the reactor provided in the example of the present invention may use the following materials: materials that will not spread impurities into the reactor at high temperatures such as high-purity silicon, high-purity silicon carbide, high-purity silicon nitride, quartz, or graphite.

In the example of the present invention, the reactor, the preheating means, and the like may be dynamically combined to be directly connected, i.e., the preheater, the filter, the reactor, the kneading, the surface treating and the like can be different sections of one chamber as a whole. Also, the reactor, the preheating means, and the like may be separated and particularly, one set of preheating means corresponds to several reactors. Thereby, it can be realized that when one of the reactors is repaired, other reactors can continue working, thus reducing the downtime.

The operation flow of the example of the reactor for producing high-purity granular silicon in the present invention will be described below by combining Fig. 1 and Fig. 2.

Before starting the reaction for the first time, high-purity granular silicon seeds are added through the solid inlet 101, the high-purity granular silicon seeds naturally stack to form a dense high-purity granular silicon bed, and the high-purity granular silicon bed is heated to a reaction temperature by the heating means.

High-purity reactant gases (silicon-containing gas and the reducing gas H₂) are mixed and then pressurized by a pump and sprayed through the feed gas nozzle 104 into the high-purity granular silicon bed, while the attendant suspension gas hydrogen gas and/or an inert gas is introduced from the attendant gas inlet 102 by a blast apparatus (pump) into the reactor chamber 10 through the gas distributor 103. The reactant gases react inside the reactor chamber 10, and the silicon-containing gas goes through a thermal decomposition reaction to produce silicons which cover the surfaces of the high-purity granular silicon seeds to make the high-purity granular silicon seeds continuously grow. The reaction tail gas discharged from the reactor chamber 10 enters the preheating means 20 and the gas-solid separating means 30. The gas-solid separating means 30 separates and collects powder silicons carried in the reaction tail gas. Moreover, the reaction tail gas uses residual heat to heat the particles and the powder silicons by the preheating means 20 and the heated high-purity silicons are returned into the reactor chamber 10 to take part in the reaction again. The reaction tail gas discharged from the preheating means 20 enters the tail gas treating means 40. The tail gas treating means 40 separates the reaction tail gas according to gas components, and then the separated gases are introduced into the reactor chamber through the reactant gas inlet or the attendant gas inlet to be recycled for use. The high-purity silicon particles (having a relatively large particle size) produced in the reactor chamber 10 are brought to the screening means 50 by an elevating means 35. After being screened by the screening means 50, high-purity granular silicons having a suitable size enter the surface treating means 60 for a surface treatment, then they are cooled by a cooling means 80, and they enter a packing means 90 for packing, thus completing the entire production process. The small particles of high-purity granular silicon screened out by the screening means 50 are heated by the preheating means 20 and then returned into the reactor chamber 10 to take part in the reaction again. When the high-purity granular silicon seeds are not enough, a portion of large particles of high-purity silicon screened out by the screening means 50 may be added into the triturator 70. After the high-purity granular silicons produced by trituration using the triturator 70 are heated by the preheating means, they return to the reactor chamber as high-purity granular silicon seeds.

For easy understanding, the reactor chamber, the gas-solid separating means, the preheating means, the screening means, the surface treating means, and the like are separately described in the example of the present invention. However, during an actual production process, all of the aforesaid parts may be integrally fitted inside one reactor chamber.

The reactor for producing high-purity granular silicon provided in the example of the present invention uses a densely-stacked high-purity granular silicon bed in a motion state, so bonding between particles is avoided and the volume of the reactor has been reduced. Moreover, the high-purity powder silicons in the reaction tail gas are captured by the densely-stacked high-purity granular silicon bed and are used as the seeds, and the residual heat of reaction tail gas is also used for heating the replenished high-purity granular silicon seeds. Therefore, the reactor provided by the example of the present invention has realized effective and continuous production of high-purity granular silicon in reduced energy, large scale, and low cost.

Example of a method for producing high-purity granular silicon by using the reactor provided by the present invention:

Referring to Fig. 1 and Fig. 2, an example of a method for producing high-purity granular silicon by using the reactor provided by the present invention comprises the following:

High-purity granular silicon seeds are added through the solid inlet 101 into the reactor chamber 10 to form a high-purity granular silicon bed in which the high-purity granular silicon seeds are in dense distribution and which has a filling ratio of greater than 10%, preferably greater than 50%. In order to have relatively smaller free space between particles in the high-purity granular silicon bed, operations such as pressurization, spouted bed and downward moving bed may be used. Specific measures may further include: 1) increasing gas speed by controlling a valve, using particles having smaller granularity, and converting a bubbling bed to a turbulent bed; 2) improving granularity structure of the particles, optimization and selection of granularity and granularity distribution of the high-purity granular silicons, particulating a gas-solid aggregative fluidized bed, reducing the average particle diameter, and broadening particle diameter distribution or increasing fine particle amount can improve fluidization quality, such as increase in the expansion degree of the bed, improvement of two phase exchanging ability, reduction of short circuit phenomenon, and possible omission of internal parts; 3) using pressurization: when the pressure is higher than one atmospheric pressure, not only the processing load can be increased, but also the difference between solid density and gas density is reduced; 4) using fast fine particles can reduce backmixing, increase two phase contacting efficiency, strengthen heat transfer, and increase production capacity; 5) using internal circulating empty-phase spouting: a self-circulation system is fitted inside the reactor to make the particles and the bed dense without agglomeration; and 6) using a moving bed (vertical, horizontal, or inclined) to increase the packing density of particles and reduce free space to thereby reduce the generation of gas-phase powders and accelerate the aggregation of powders into particles.

The high-purity granular silicon bed is heated so as to make the temperature of the high-purity granular silicon bed 100°C to 1,400°C, preferably 300°C to 1,200°C. This heating method may electrically connect the high-purity granular silicon bed with a power supply, i.e., adding an electric pressure to the high-purity granular silicon bed and using heat liberated from resistance of silicon itself to carry out the heating. Likewise, it may also use a high-purity silicon rod charged with electricity to carry out the heating as similar to the Siemens process.

In the production of high-purity granular silicon, in order to make it uneasy for the silicon particles to be bonded, the high-purity granular silicons in the high-purity granular silicon bed need to be in a relative motion state. The following methods may be used for realization of making the high-purity granular silicons in a relative motion state: 1) spraying the attendant gas and/or the feed gas into the reactor chamber 10 to induce the high-purity granular silicon bed in a relative motion state; 2) introducing an external force such as spraying, turning, stirring, mixing, vibrating or flowing under gravity; 3) making the reactor in other gravitational field (such as a centrifugal force field); 4) using a stirred fluidized bed; and 5) using a vibrated fluidized bed (including mechanical vibration, sound wave or ultrasonic vibration, and insertion type vibration).

The attendant gas and the feed gas are introduced respectively from the attendant gas inlet 102 and the feed gas inlet 105 through the gas distributor 103. The attendant gas is H₂ and or an inert gas. The feed gas may be a silicon-containing gas or the feed gas may also be a silicon-containing gas and the reducing gas H₂. The reaction pressure inside the reactor chamber 10 is 0.1 to 100 atmospheres, preferably 0.1 to 50 atmospheres.

Flow rates of the attendant gas and the feed gas are not limited by the minimum floating flow velocity of traditional fluidized bed. The gas velocity may be less than critical fluidization velocity (Umf) and the gas velocity may be controlled between 0.01 Umf and 10 Umf Thus, the following advantages can be brought about gas stream is saved, heating and energy loss is reduced, processing load of tail gases is reduced, and contamination is reduced; and the present invention has a large scope of operation in production for the gases may be in large or small amount, and production will not be halted due to temporary reduction of raw materials.

The reaction tail gas heats the high-purity granular silicons replenished as the seeds through the preheating means 20. The replenished high-purity granular silicons heated return into the reactor chamber 10.

The reaction tail gas passes through the preheating means and enters the tail gas treating means 40 for separation, and the gases separated out are introduced through the attendant gas inlet 102 or the feed gas inlet 105 according to the gas components into the reactor chamber 10 to be recycled for use. When the tail gases return to the reactor chamber 10 after circulation, they have to pass through the high-purity granular silicon bed. At this time, the gases usually carry high-purity powder silicons, and the high-purity granular silicon bed can act as a dust catcher. That is, when the gases are passing through the high-purity granular silicon bed, the high-purity powder silicons carried in the gases will be captured and kept in the high-purity granular silicon bed as high-purity granular silicon seeds.

After the high-purity granular silicon product obtained by reaction is subjected to a surface treatment by the surface treating means, it is cooled and then collected, wherein the process of the surface treatment may be as follows: the high-purity granular silicon product passes through a reaction chamber containing low-concentration feed gas having a concentration of 0% to 10% to generate a dense silicon structure on the surface of the high-purity granular silicon product.

Furthermore, in order to better capture high-purity powder silicons in the reaction tail gas and use them as replenished high-purity granular silicon seeds, the method for producing high-purity granular silicon in the present invention further comprises that the reaction tail gas passes through the gas-solid separating means 30 to separate out high-purity powder silicons carried in the reaction tail gas. This process may be as follows: the reaction tail gas passes through the densely-stacked high-purity granular silicon particle layer (having a filling ratio of greater than 50%) to separate out high-purity powder silicons. This process not only can prevent high-purity powder silicons from entering the reaction downstream but also can simply produce high-purity granular silicon seeds without contamination.

In order to make the high-purity granular silicon particles produced have a uniform size, the method for producing high-purity granular silicon in the present invention may further comprises: transporting relatively large particles of high-purity granular silicon after the reaction into the screening means 50 through an elevating machine or a transporting channel, obtaining large particles of high-purity granular silicons having a particle size meeting the requirement by screening, and heating the high-purity granular silicons having a particle size not meeting the requirement by the preheating means and returning them to the reaction chamber to continue to react. Thereby, the size of the product particles can be controlled within the optimal size range that is needed, which not only can reduce possible surface contamination (when the particles are relatively small, they tend to be contaminated due to relatively large surface area thereof) but also facilitate the utilization in the downstream production. During the screening and recycling processes, direct contact of silicon particles with other element materials, metals in particular, shall be avoided as far as possible to prevent a decrease in product quality due to impurity contamination. The granularity of the high-purity granular silicon particles obtained by production in the example of the present invention is between 1 mm and 20 cm, preferably between 3 mm and 5 mm, and the crystal size is not greater than 30% of the granularity and preferred crystal size is 1 nm to 500 nm. Crystal size is the size of a small monocrystalline piece in the particle. For instance, a polycrystalline particle having a granularity of 2 mm may be composed of many small monocrystalline particles having different crystal sizes (between 1 nm and 500 nm). The density of the high-purity granular silicon particle produced in the example of the present invention is preferably 1 g/cm³ to 2.4 g/cm³.

Furthermore, when the high-purity granular silicon seeds in the reactor chamber 10 are still not enough after high-purity granular silicon seeds are replenished through the gas-solid separating means 30, high-purity granular silicon seeds can be replenished in the following manner: a portion of large particles of high-purity granular silicon screened out are introduced into the triturator 70 to be triturated into high-purity granular silicon particles, and then the high-purity granular silicon particles are heated by the preheating means 20 and afterwards returned into the reactor chamber 10 as the high-purity granular silicon seeds.

The order of reaction for producing high-purity granular silicon in the example of the present invention is I to 50, preferable 1 to 20, and more preferably 3 to 10.

During the process of producing high-purity granular silicon in the example of the present invention, the materials are transported or handled through the following methods: 1) a gravity flow method, i.e., a method in which solid particles flow into a bed and flow out of the bed relying on their own gravity, wherein in order to make the solid particles successfully flow, a small amount of gas may be introduced into proper place of the pipeline to loosen the solid particles to facilitate flowing; 2) a mechanical transporting method in which machines usually used are screw conveyors, belt feeders, disk feeders, star feeders, bucket elevators, and the like; and 3) an aerodynamic force transporting method.

The example of a method for producing high-purity granular silicon by using the reactor of the present invention provided by the present invention uses a densely-stacked high-purity granular silicon bed in a motion state, so bonding between particles is avoided and the volume of the reactor has been reduced. Moreover, the high-purity powder silicons in the reaction tail gas are captured by the densely-stacked high-purity granular silicon bed and are used as the seeds, and the residual heat of reaction tail gas is also used for heating the replenished high-purity granular silicons. Therefore, the method provided by the example of the present invention has realized effective and continuous production of high-purity granular silicon in reduced energy, large scale, and low cost.

An experimental example of production of high-purity granular silicon in the present invention will be given below.

10 kilograms of high-purity granular silicon seeds having a diameter of 0.1 mm to 2 mm are placed inside a drum-shaped reactor having a diameter of 15 cm and the reactor is heated by a medium frequency furnace at the same time. The high-purity granular silicon seeds in the reactor are stirred by a multi-blade stirrer to make the entire high-purity granular silicon bed densely stacked while the particles being in a relative motion state. When the temperature is 600°C to 680°C, silicon-containing gas silane having a concentration of 50% to 75% is introduced. The time period of the experiment is 6.5 hours. After the experiment ends, particles in the reactor are weighed and the total weight has increased by 4.35 kilograms. On average, electric power consumption per production of one kilogram of silicon is 3.45 kilowatts. The conversion efficiency of silane is 98%.

Table 1 shows a comparison between specific experimental data of using two kinds of different reactors to produce high-purity granular silicon, wherein Experiment 2 is an experiment conducted by using the example of the present invention.

**Table I Experimental data of using two kinds of different reactors**

| | Experiment 1 | Experiment 2 |
|---|---|---|
| Reactor | Loose spouted bed | Dense stirred bed |
| Temperature (°C) | 600 to 680 | 600 to 680 |
| Silane component in argon gas | 10% | 50% to 75% |
| Increase in total weight of silicon particles (gram) | 990 | 4,350 |
| Reaction time (hour) | 10 | 6-5 |
| Conversion efficiency of silane (%) | 79.5 | 98 |
| Electric power consumption per one kilogram of product (kwh/kg) | 12 | 3.45 |

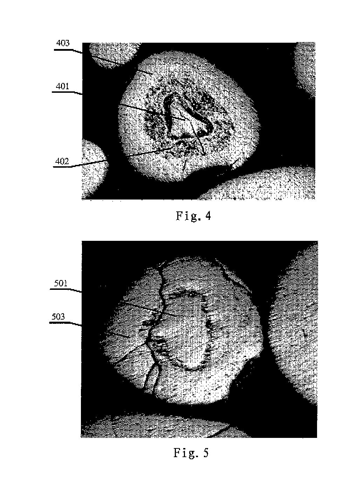

Fig. 4 and Fig. 5 are cross-sectional optical microphotographs of the high-purity granular silicon produced in the examples of the present invention. Referring to Fig. 4 and Fig, 5, a first seed 401 and a second seed 501 located in the center of the high-purity granular silicons and a first growth layer 403 and a second growth layer 503 encapsulating the periphery of the seeds can be seen. In Fig. 4, a large amount of granular encapsulating substances 402 between the first growth layer 403 and the first seed 401 can be clearly seen. These granular encapsulating substances 402 are powder silicons generated by gas phase. In the reaction, these powder silicons are deposited into large granular silicons. This is the kneading effect of kneading powder silicons into granular silicons described in the example of the present invention. A portion of powder silicons drop into granular silicons, thereby accelerating the reaction speed, increasing the efficiency, and reducing the overall energy consumption.

Fig. 6 is an X-ray diffraction pattern of the high-purity granular silicon produced in the examples of the present invention. Referring to Fig. 6, a relatively sharp characteristic line of silicon (half band width being 0.12 degree) can be seen, which indicates that the crystal grain of the silicon produced in the present invention is greater than 1.0 µm.

After neutron activation analysis on the high-purity granular silicon produced in the examples of the present invention and on commercial electronic grade granular silicon, Table 2 shows a component analysis on heavy metals in the high-purity granular silicon product produced in the examples of the present invention and in the commercial electronic grade granular silicon, the unit being part per million. It can be known from Table 2 that the amounts of impurities in the high-purity granular silicon product produced in the examples of the present invention are quite similar to the amounts of impurities in the commercial electronic grade granular silicon, i.e., the high-purity granular silicon product produced in the examples of the present invention measures up to the standards of commercial electronic grade granular silicon.

**Table 2 Comparison of impurity components between commercial electronic grade granular silicon and the experimental product in the present invention**

| Element | Commercial electronic grade granular silicon | Experimental product in the present invention |
|---|---|---|
| As | | 4.13E-04 |
| Au | 2.75E-06 | 1.16E-06 |
| Ce | 3.08E-03 | 2.60E-03 |
| Ga | 3.33E-04 | 3.87E-04 |
| La | 1.90E-05 | 3.68E-04 |
| Mo | 3.71E-03 | 2.33E-03 |
| Sc | | 3.76E-05 |
| Sm | | 1.74E-05 |
| Th | | 2.20E-04 |
| U | | 8.47E-05 |
| W | | 5.00E-04 |

At last, it should be pointed out that the aforesaid examples are merely for explaining the technical solutions of the present invention rather than for limiting the technical solutions of the present invention. The present invention is explained in detail by referring to the aforesaid examples, so a person of ordinary skill in the art should understand the present invention, but a person of ordinary skill in the art still can modify the technical solutions recorded in all the examples described above or make equivalent substitutions to part of the technical features therein. However, these modifications or substitutions do not enable the essence of corresponding technical solutions to depart from the spirit and scope of the technical solution of each example in the present invention.

## Claims

1. A reactor for producing high-purity granular silicon, comprising: a reactor chamber, **characterized in that**
a solid inlet, an attendant gas inlet, a feed gas inlet, and a tail gas outlet are fitted on the reactor chamber;
a gas distributor is fitted inside the reactor chamber, wherein the gas distributor is used for dispersing attendant gas and feed gas into the reactor chamber;
the reactor chamber is fitted with an internal or external preheating means; and a tail gas treating means is fitted outside the reactor chamber and is connected between the preheating means and the attendant gas inlet and the feed gas inlet;
the reactor chamber is connected to an internal or external surface treating means which is used for surface treating high-purity granular silicon obtained by production; and
the reactor chamber is fitted with internal or external heating means and motion inducing means, wherein the motion inducing means is used for inducing high-purity granular silicons in a high-purity granular silicon bed inside the reactor chamber to be in a relative motion state.

2. The reactor for producing high-purity granular silicon according to Claim 1, **characterized in that** it further comprises a gas-solid separating means connected with the preheating means, wherein the gas-solid separating means is used for separating and collecting high-purity powder silicon in the reaction tail gas.

3. The reactor for producing high-purity granular silicon according to Claim 2, **characterized in that** the gas-solid separating means is a densely-stacked high-purity granular silicon layer, wherein the densely-stacked high-purity granular silicon layer has a filling ratio of above 50%.

4. The reactor for producing high-purity granular silicon according to Claim 1, **characterized in that** it further comprises a screening means which is connected between the reactor chamber and the surface treating means.

5. The reactor for producing high-purity granular silicon according to Claim 4, **characterized in that** it further comprises a triturator which is connected with the screening means and used for triturating granular silicons screened out, wherein the outlet of the triturator is connected with the solid inlet of the preheating means.

6. The reactor for producing high-purity granular silicon according to Claim I, **characterized in that** the surface treating means is a reaction chamber containing low-concentration feed gas having a concentration of 0% to 10%,

7. The reactor for producing high-purity granular silicon according to Claim 1, **characterized in that** the motion inducing means is an attendant gas nozzle and/or a feed gas nozzle, wherein the attendant gas nozzle and the feed gas nozzle are fitted inside the reactor chamber and are respectively connected with the attendant gas inlet and the feed gas inlet.

8. The reactor for producing high-purity granular silicon according to Claim 1, **characterized in that** the heating means is a power supply electrically connected with the high-purity granular silicon bed.

9. The reactor for producing high-purity granular silicon according to Claim 1, **characterized in that** the reactor chamber further comprises a gas curtain means which is tangent to the inner wall of the reaction chamber.

10. The reactor for producing high-purity granular silicon according to Claim 1, **characterized in that** the material of the reactor is high-purity silicon, high-purity silicon carbide, high-purity silicon nitride, quartz, or graphite.

11. The reactor for producing high-purity granular silicon according to Claim 1, **characterized in that** the height of the reactor chamber is 1 m to 100 m, or the height of the reactor chamber is 1 m to 50 m.

12. The reactor for producing high-purity granular silicon according to Claim 1, **characterized in that** the reaction order of the reactor chamber and the preheating means is 1 to 50, or the reaction order of the reactor chamber and the preheating means is I to 20.

13. A method for producing high-purity granular silicon, **characterized in that** it comprises the following steps of:
forming a high-purity granular silicon bed in which high-purity granular silicons are densely distributed and which has a filling ratio of above 10%;
heating the high-purity granular silicon bed so as to make the temperature of the high-purity granular silicon bed 100°C to 1,400°C; and making the high-purity granular silicons in the high-purity granular silicon bed in a relative motion state;
introducing attendant gas and feed gas, wherein the attendant gas is high-purity H₂ and/or inert gas, and the feed gas is a silicon-containing gas or the feed gas is a silicon-containing gas and the reducing gas H₂,
introducing the reaction tail gas into the reactor chamber through the attendant gas inlet or the feed gas inlet to be recycled for use after the reaction tail gas has exchanged heat with the replenished high-purity granular silicons and then separated by the tail gas treating means according to gas components; and getting the replenished high-purity granular silicons into the reactor chamber after they have been heated; and
surface treating the high-purity granular silicons obtained by production, and then cooling, collecting, and packing them.

14. The method for producing high-purity granular silicon according to Claim 13, **characterized in that** it further comprises:
separating out high-purity powder silicons from the reaction tail gas and adding the high-purity powder silicons into the high-purity granular silicon bed; or
cracking a portion of the high-purity granular silicons obtained by production into small particles of high-purity silicon and adding the small particles of high-purity silicon into the high-purity granular silicon bed.

15. The method for producing high-purity granular silicon according to Claim 14, **characterized in that**
the process of the separating out high-purity powder silicons from the reaction tail gas is specifically as follows: passing the reaction tail gas through the densely-stacked high-purity granular silicon layer to separate out high-purity powder silicons, wherein the densely-stacked high-purity granular silicon layer has a filling ratio of above 50%.

16. The method for producing high-purity granular silicon according to Claim 13, **characterized in that** it further comprises: screening large particles of the high-purity granular silicons obtained by production to obtain a high-purity granular silicon product having a uniform granularity.

17. The method for producing high-purity granular silicon according to Claim 13, **characterized in that** the method of the making the high-purity granular silicons in the high-purity granular silicon bed in a relative motion state is as follows: spraying the attendant gas and/or the feed gas into the reactor chamber to stir the high-purity granular silicon bed.

18. The method for producing high-purity granular silicon according to Claim 13, **characterized in that** the process of the surface treating the high-purity granular silicons obtained by production is as follows: passing the high-purity granular silicons through a reaction chamber containing low-concentration feed gas having a concentration of 0% to 10%.

19. The method for producing high-purity granular silicon according to Claim 13, **characterized in that** the method of the heating the high-purity granular silicon bed is as follows: electrically connecting the high-purity granular silicon bed with a power supply.
